# EUROPÄISCHE PATENTSCHRIFT

(11) **EP 1 645 400 B1**
(45) Veröffentlichungstag und Bekanntmachung des Hinweises auf die Patenterteilung: **26.09.2007**
(21) Anmeldenummer: 05014401.3
(22) Anmeldetag: 02.07.2005
(51) Int. Cl.: B29C 51/42

(54) **Verfahren zum Starten und Stoppen einer kontinuierlich arbeitenden Thermoformmaschine mit einer Heizstation**
Method for starting up and stopping a continuously working thermoforming machine with a heating station
Procédé de démarrage et d'arrêtage d'un dispositif de thermoformage avec un poste de chauffage

(30) Priorität: 09.10.2004 DE 102004049267
(43) Veröffentlichungstag der Anmeldung: 12.04.2006
(73) Patentinhaber: UHLMANN PAC-SYSTEME GmbH & Co. KG, 88471 Laupheim (DE)
(72) Erfinder: Matzenmüller, Jürgen, 88416 Bellamont (DE); Grube, Wolfgang, 88400 Biberach (DE)
(74) Vertreter: Hentrich, Swen

(56) Entgegenhaltungen:
- DE-B- 1 145 784
- US-A- 4 209 957
- US-A- 4 883 419

## Beschreibung

Die Erfindung ist ein Verfahren zum Starten insbesondere einer kontinuierlich arbeitenden Thermoformmaschine mit einer Heizstation, in der im Stillstand eine Abschirmplatte zwischen die Wärmequelle und die Formfolie verstellt ist, bei dem die Verweildauer der Formfolie im Normalbetrieb mit konstanter Vorschubgeschwindigkeit in der Heizstation bestimmt und der Beschleunigungsverlauf der Formfolie aus dem Stillstand bis zum Erreichen der konstanten Vorschubgeschwindigkeit festgelegt wird, und bei dem der Beschleunigungsverlauf der entgegen der Vorschubrichtung der Formfolie aus der Heizstation entfernten Abschirmplatte so bestimmt wird, daß die lokal nicht mehr von der Abschirmplatte abgeschatteten Formfolienbereiche in der Heizstation in einer der Verweildauer entsprechenden Transferzeit von dem in Förderrichtung vorderen Rand der Abschirmplatte bis zum Ende der Heizstation gefördert werden. Gegenstand der Erfindung ist weiterhin ein Verfahren zum Stoppen der Thermoformmaschine.

Aus dem Stand der Technik sind Thermoformmaschinen bekannt, mit der Formfolien einer Formstation zugeführt werden, die zum Ausbilden von Näpfen in der Folie dient, die nachfolgend in einer Füllstation befüllt, in einer Siegelstation mit einer Siegelfolie verschlossen werden. Der Formstation ist in der Regel eine Heizstation vorgelagert, in der die Formfolie auf die für die Ausbildung der Näpfe in der Formstation erforderliche Temperatur erwärmt wird. Die Erwärmung kann dabei kontaktbehaftet mittels Heizplatten erfolgen oder kontaktlos durch mit Abstand zu der Formfolie in der Heizstation angeordnete Heizelemente, deren Heizwirkung durch eine zwischen die Heizelemente und die Formfolie einführbare Abschirmplatte gestoppt werden kann. In DE 27 45 422 A1 und US 4209957 sind Verfahren zum Ingangsetzen und Stillsetzen einer Thermoformmaschine beschrieben, die taktweise arbeitet, so daß die Formfolie abschnittsweise in der Heizstation erwärmt und dieser Abschnitt im nächsten Takt zur weiteren Verarbeitung in die Formstation überführt wird. Im wesentlichen erfolgt das Starten und Stoppen der taktweise betriebenen Thermoformmaschine dadurch, daß in dem der Änderung des Vorschubs der Formfolie vorgehenden Takt die Abschirmplatte aus der Heizstation entfernt beziehungsweise in die Heizstation eingebracht wird, so daß insbesondere beim Starten der Thermoformmaschine die Formfolienbereiche in der Heizstation einen Takt lang aufgeheizt und nachfolgend in üblicher Weise in der Formstation verarbeitet werden können.

Dieses Verfahren ist bei einer kontinuierlich arbeitenden Thermoformmaschine aber nicht einsetzbar, eben weil eine Taktung fehlt und die in der Heizstation befindlichen Formfolienbereiche mit dem einsetzenden Vorschub kontinuierlich aus der Heizstation entfernt werden. Unzureichend erwärmte Formfolienbereiche lassen sich jedoch nicht ordnungsgemäß weiterverarbeiten, so daß bei einer kontinuierlich arbeitenden Thermoformmaschine beim Starten Abfall produziert wird. Problematisch ist auch das Stoppen einer kontinuierlich arbeitenden Thermoformmaschine, da die in die Heizstation eingeführten Formfolienbereiche noch erwärmt werden und keine definierte Ausgangstemperatur garantiert beziehungsweise vorausgesetzt werden kann für einen nachfolgenden Start der Thermoformmaschine.

In der DE 198 50 143 A1 ist eine Vorrichtung zum Verbinden zweier Körper offenbart, nämlich einer Haftklebstoffschicht auf einem Dichtungsprofil. Die beiden Körper werden dazu mit NIR-Strahlern erwärmt, wobei die Erwärmung nachfolgend durch Pyrometer kontrolliert wird. Die DE 198 50 143 A1 offenbart auch den Hinweis, daß die NIR-Strahlung innerhalb von Sekundenbruchteilen durch Einsatz von Blenden begonnen oder abgebrochen werden kann, jedoch enthält diese Entgegenhaltung keinen Hinweis, wie bei kontinuierlich vorgeschobenen Körpern zur Vermeidung von Abfall die ordnungsgemäße Erwärmung und das Erreichen der Verarbeitungstemperatur auch länger ausgedehnter Bereiche beim Starten der Vorrichtung sichergestellt werden kann.

Der Erfindung liegt daher die Aufgabe zugrunde, ein Verfahren zum Starten einer Thermoformmaschine anzugeben, mit dem Abfall von Thermoformfolie reduziert oder sogar vollständig vermieden werden kann. Aufgabe ist es weiterhin, ein Verfahren zum Stoppen einer Thermoformmaschine anzugeben, durch das für das nachfolgende Starten definierte Anfangsbedingungen bereitgestellt werden können.

Der das Starten betreffende Teil der Aufgabe wird durch das eingangs genannte Verfahren gelöst, das sich durch die Vorteile auszeichnet, daß beim Starten des Vorschubs der Thermoformmaschine in der Formfolie ein Temperatursprung erzeugt wird an dem in Vorschubrichtung vorderen, stromab liegenden Rand der Heizstation, so daß der gesamte in der Heizstation liegende Formfolienbereich die zur weiteren Verarbeitung erforderliche Folientemperatur erreicht. Es liegt eine Minimierung des Folienabfalls vor auf die zwischen dem Ende der Heizstation und dem Anfang der Formstation liegenden Bereiche und die weitere Produktion nach einem Stopp der Thermoformmaschine kann schneller wieder aufgenommen werden. Bei einem Start der Thermoformmaschine wird für die in der Heizstation befindlichen Formfolienabschnitte sichergestellt, daß diese die volle Verweildauer in der Heizstation durch die Wärmequelle erwärmt werden können und so sicher die Verarbeitungstemperatur erreichen.

Notwendig ist es, wenn beim Starten der Thermoformmaschine der Beginn der Verstellung der Abschirmplatte um eine Verweildauer vor dem Beginn des Vorschubs der Thermoformfolie liegt, da so auch die Erwärmung insbesondere die am stromab liegenden Ende der Heizstation platzierten Formfolienabschnitte unabhängig von der Ausdehnung der Heizstation gewährleistet ist.

Um eine möglichst gleichmäßige Erwärmung über die gesamte Ausdehnung der Heizstation in Förderrichtung zu gewährleisten, werden als Wärmequellen eine Mehrzahl in Förderrichtung der Formfolie benachbarter NIR-Strahler eingesetzt, die berührungslos im wesentlichen durch Wärmestrahlung die Erwärmung der Thermoformfolie bewirken. Vorgesehen ist weiterhin, daß die Heizleistung der NIR-Strahler im Stillstand der Thermoformmaschine reduziert wird, um so ein Aufheizen der Abschirmplatte zu vermeiden beziehungsweise eine aufwendige Kühleinrichtung für die Abschirmplatte einzusparen.

Dann ist im Rahmen der Erfindung vorgesehen, daß die Heizleistung der NIR-Strahler beim Starten der Thermoformmaschine so frühzeitig erhöht wird, daß beim Beginn des Vorschubs der Formfolie die Heizleistung des Dauerbetriebs erreicht ist. Noch vorteilhafter ist es, wenn die Heizleistung der NIR-Strahler beim Starten der Thermoformmaschine so frühzeitig erhöht wird, daß bei Beginn der Verstellung der Abschirmplatte die Heizleistung des Dauerbetriebs erreicht ist, da so bereits eine konstante Heizleistung der NIR-Strahler vorliegt, wenn die Abschirmplatte entgegen der Vorschubrichtung der Thermoformfolie aus der Heizstation verschoben wird und nicht wegen einer reduzierten Heizleistung die Transferzeit erhöht werden muß, um die erforderliche Wärmemenge in die Formfolie einzubringen.

Da bei der Verstellung der Abschirmplatte aus der Heizstation die Abschattung der NIR-Strahler variiert und darüber hinaus die NIR-Strahler nicht alle die identische Strahlungsleistung aufweisen, ist eine homogene Strahlungsverteilung in der Heizstation nicht gewährleistet. Um trotzdem die erforderliche Erwärmung der Thermoformfolie sicherzustellen, ist der Verfahrensschritt vorgesehen, daß zumindest beim Start der Thermoformmaschine mittels einer der Heizstation nachgeordneten Temperatursensors die Temperatur der Thermoformfolie gemessen und als Regelgröße in einen Regelkreis für die Verweildauer der Thermoformfolie in der Heizstation oder Stellgrad der Heizung genutzt wird. Zweckmäßigerweise wird als Temperatursensor für die berührungslose Messung der Temperatur ein Pyrometer eingesetzt.

Der das Stoppen betreffende Teil der Aufgabe wird gelöst durch ein Verfahren zum Stoppen insbesondere einer kontinuierlich arbeitenden Thermoformmaschine mit einer Heizstation, in der für den Stillstand in Förderrichtung der Formfolie eine Abschirmplatte zwischen die Wärmequelle und die Formfolie verstellt wird, bei dem der in Förderrichtung vordere Rand der Abschirmplatte mit dem am Ende der Heizstation zur Ruhe kommenden Formfolienbereich sychronisiert und synchronisiert durch die Heizstation bewegt und abgebremst wird. Durch dieses Verfahren ist sichergestellt, daß beim Stillstand der Thermoformmaschine alle bereits erwärmte Formfolie verarbeitet werden kann und die Formfolie erst abgebremst wird, wenn der letzte zu verabeitende Formfolienabschnitt die Heizstation verlassen hat. Die in Förderrichtung vordere Kante der Abschirmplatte wird dazu exakt auf die Linie der Formfolie aufsynchronisiert, welche später das Ende des Formfolienabschnittes in der Heizstation bildet. Nachdem die synchronisierte Bewegung der Abschirmplatte mit der Thermoformfolie erreicht ist, wird die Synchronizität auch beim Abbremsen der Formfolie bis zum Stillstand aufrechterhalten.

Der Vereinfachung halber ist dabei vorgesehen, daß die Aufsynchronisierung der Abschirmplatte mit dem Formfolienabschnitt außerhalb, stromauf vor der Heizstation erfolgt, also die Abschirmplatte beim Starten der Thermoformmaschine vollständig aus der Heizstation entfernt und mit Abstand zu dieser platziert wird, so daß die Aufsynchronisierung ohne Zeit- oder Platzmangel erfolgen kann und die Abschirmplatte bereits synchron mit dem entsprechednden Formfolienabschnitt in die Heizstation einläuft. Die Abbremsung der Formfolie wird erst gestartet, wenn der letzte erwärmte und zu verarbeitende Formfolienabschnitt die Heizstation verlassen hat, so daß die in der Heizstation erwärmten Formfolienabschnitte ohne Modifikation des üblichen Ablaufes verarbeitet werden können.

Im folgenden wird die Erfindung an in der Zeichnung dargestellten Ausführungsbeispielen erläutert; es zeigen:
- Fig. 1: von einer Thermoformmaschine die Heizstation in einer schematischen Darstellung einer Vorderansicht mit der in der Heizstation eingefahrenen Abschirmplatte,

- Fig. 2: eine der Fig. 1 entsprechende Darstellung mit der während des Startens der nicht dargestellten Thermoformmaschine aus der Heizstation verstellten Abschirmplatte,
- Fig. 3: eine der Fig. 1 entsprechende Darstellung mit der Stellung der Abschirmplatte während des Normalbetriebes der Thermoformmaschine,
- Fig. 4: eine grafische Darstellung der zeitlich aufeinander abgestimmten Korrelation der für den Start der Thermoformmaschine wesentlichen Parameter in der Heizstation,
- Fig. 5: eine grafische Darstellung des von der Thermoformfolie und der Abschirmplatte zurückgelegten Weges in Abhängigkeit der Zeit, und
- Fig. 6: eine grafische Darstellung des zurückgelegten Weges der Formfolie in Abhängigkeit von der Zeit zur Bestimmung der Position der Abschirmplatte.

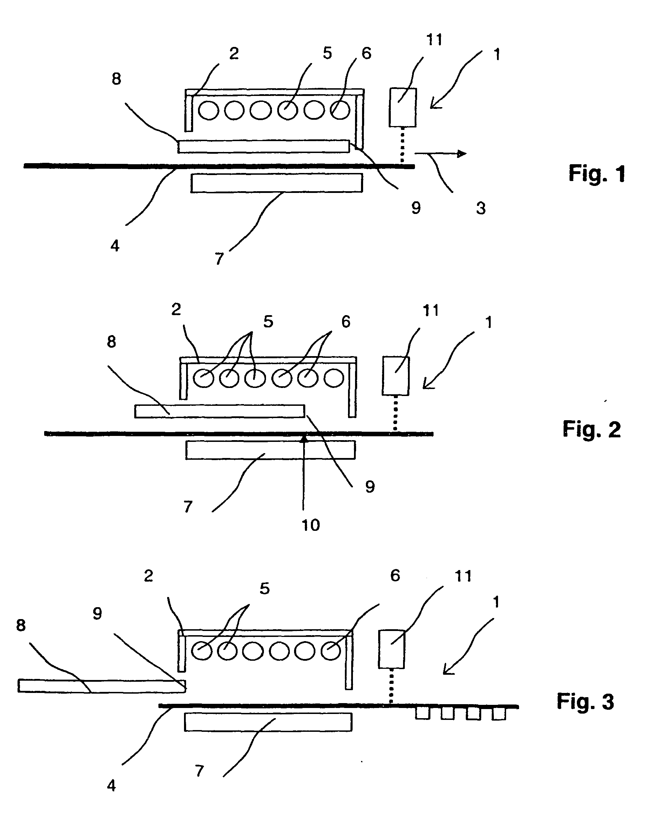

In der Zeichnung ist von einer Thermoformmaschine lediglich die zur Erläuterung der erfindungsgemäßen Verfahren erforderliche Heizstation 1 schematsich dargestellt, die ein Gehäuse 2 aufweist, in dem oberhalb einer in Richtung des Pfeils 3 die Heizstation 1 durchlaufenden Formfolie 4 eine Mehrzahl von NIR-Strahler 5 als Wärmequellen 6 angeordnet sind. Auf der der Formfolie 4 gegenüberliegenden Seite der Wärmequellen 6 ist ein Gegenreflektor 7 stationär angeordnet. In dem Gehäuse 2 der Heizstation 1 ist zwischen den Wärmequellen 6 und der Formfolie 4 eine Abschirmplatte 8 verstellbar angeordnet, die entgegen der Vorschubrichtung 3 der Formfolie 4 aus der Heizstation 1 mittels eines geregelten Antriebs verstellt werden kann. Fig. 1 zeigt den Zustand der Heizstation 1 während eines Stillstandes der Thermoformmaschine, bei dem die Formfolie 4 durch die Abschirmplatte 8 gegen eine Erwärmung durch die Wärmequellen 6 geschützt ist, wozu zusätzlich die Heizleistung der NIR-Strahler 5 reduziert ist.

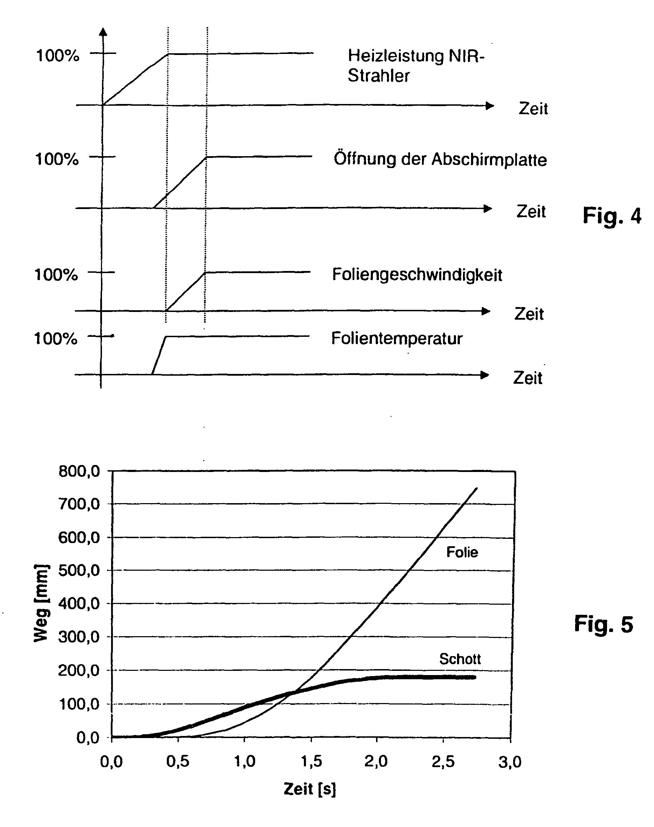

Fig. 3 zeigt eine Momentaufnahme des Zustandes der Heizstation 1 während des Normalbetriebes, in dem die Formfolie 4 kontinuierlich vorgeschoben wird mit konstanter Vorschubgeschwindigkeit, so daß ein beliebiger Formfolienbereich für eine sich aus der Länge der Heizstation 1 und der konstanten Vorschubgeschwindigkeit ergebenden Verweildauer in der Heizstation verbleibt und während der Verweildauer D durch die mit konstanter Heizleistung arbeitenden NIR-Strahler 5 die Wärmemenge zugeführt erhält, die erforderlich ist, um den Formfolienbereich von der Anfangstemperatur beim Eintritt in die Heizstation 1 auf die zur weiteren Verarbeitung erforderliche Formtemperatur zu erwärmen.

Um den Abfall an Formfolie 4 ebenso wie die Stillstandzeit der Thermoformmaschine zu minimieren, wird zum einen der Beschleunigungsverlauf der Formfolie 4 aus dem Stillstand bis zum Erreichen der konstanten Vorschubgeschwindigkeit festgelegt. In Abhängigkeit des Beschleunigungsverlaufes der Formfolie 4 wird der Beschleunigungsverlauf der entgegen der Vorschubrichtung der Formfolie 4 aus der Heizstation 1 entfernten Abschirmplatte 8 so bestimmt, daß die lokal nicht mehr von der Abschirmplatte 8 abgeschatteten Formfolienbereiche in der Heizstation 1 in einer der Verweildauer D entsprechenden Transferzeit von dem in Förderrichtung vorderen Rand 9 der Abschirmplatte 8 bis zum Ende der Heizstation 1 gefördert wird. Dies bedeutet, daß der in Fig. 2 durch den Pfeil 10 gekennzeichnete Formfolienbereich, der sich unmittelbar unterhalb der stromab gelegenen, vorderen Randes 9 der Abschirmplatte 8 befindet, von seiner momentanen Position bis zum Ende der Heizstation 1 in einer Zeit transferiert wird, die der Verweildauer D im Normalbetrieb entspricht, so daß ausreichend Zeit verbleibt, die erforderliche Wärmemenge zuzuführen.

Es ist offensichtlich, daß für die am stromab gelegenen Rand der Heizstation 1 liegenden Formfolienbereiche die erforderliche Transferzeit einfach bereitgestellt werden kann, indem beim Starten der Thermoformmaschine der Beginn der Verstellung der Abschirmplatte 8 um eine Verweildauer D vor dem Beginn des Vorschubs der Formfolie 4 liegt. Weiterhin wird auch vor dem Beginn des Vorschubs der Formfolie 4 die Heizleistung der NIR-Strahler 5 wieder auf den Normalwert erhöht und zwar zweckmäßigerweise so frühzeitig, daß beim Beginn der Verstellung der Abschirmplatte 8 die Heizleistung des Dauerbetriebes erreicht ist, also in der Transferzeit der nicht mehr von der Abschirmplatte 8 abgeschatteten Formfolienabschnitte die volle, konstante Heizleistung zur Verfügung steht und sich dadurch keine Variation der während der Transferzeit zugeführten Wärmemenge ergibt. Fig. 4 zeigt diesbezüglich die aufeinander abgestimmte zeitliche Veränderung der wesentlichen Parameter mit der zu oberst dargestellten Erhöhung der Heizleistung der NIR-Strahler mit dem zeitlich nachfolgenden Beginn der Verstellung der Abschirmplatte 8 entgegen der Vorschubrichtung der Formfolie 4, dem Start des Vorschubs der Formfolie 4 und der sich daraus in Abhängigkeit der Vorschubgeschwindigkeit der Formfolie 4 ergebenden Temperatur.

Der theoretisch ermittelte Beschleunigungsverlauf der Abschirmplatte 8 wird kontrolliert mittels eines der Heizstation 1 nachgeordneten Temperatursensors, nämlich eines Pyrometers 11, mit dem die Temperatur der Formfolie 4 gemessen und als Regelgröße in einem Regelkreis für die Verweildauer der Formfolie 4 in der Heizstation 1 genutzt wird.

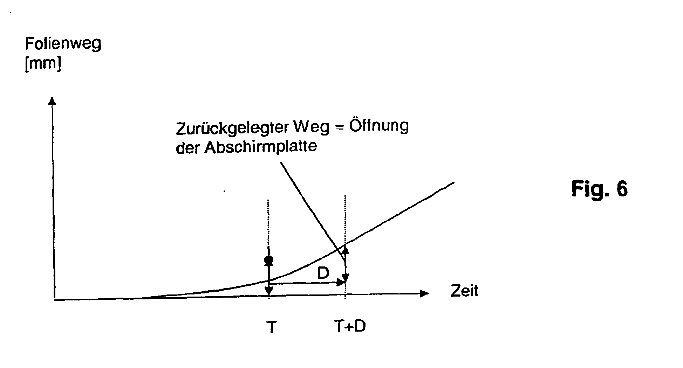

Fig. 6 zeigt den von der Formfolie 4 zurückgelegten Weg in Abhängigkeit von der Zeit sowie die sich daraus ergebende Position der Abschirmplatte 8. Zu einem Zeitpunkt T geht man die Verweildauer D auf der Zeitachse nach rechts und ermittelt den vertikalen Abstand zur Folienanlaufkurve nach der Verweildauer D. Dieser Abstand entspricht der Öffnung der Abschirmplatte 8 zum Zeitpunkt T, so daß die Bewegung der Abschirmplatte 8 aus dem Beschleunigungsverlauf der Formfolie 4 theoretisch abgeleitet werden kann.

Damit beim Stoppen der Thermoformmaschine sämtliche erwärmten Formfolienabschnitte ordnungsgemäß weiterverarbeitet werden können, erfolgt die Abbremsung der Formfolie 4 erst, wenn der letzte erwärmte und zu verarbeitende Formfolienabschnitt die Heizstation 1 verlassen hat, wobei weiterhin der in Förderrichtung vordere Rand 9 der Abschirmplatte 8 mit dem am Ende der Heizstation 1 zur Ruhe kommenden Formfolienabschnitt synchronisiert und synchronisiert durch die Heizstation 1 bewegt und in der Heizstation 1 abgebremst wird. Da für den Normalbetrieb lediglich erforderlich ist, daß die Abschirmplatte 8 aus der Heizstation 1 vollständig verstellt wird, aber die Position der Abschirmplatte 8 außerhalb der Heizstation 1 im Normalbetrieb beliebig ist, besteht auch die Möglichkeit, die Abschirmplatte 8 außerhalb der Heizstation 1 mit dem Formfolienabschnitt zu synchronisieren und die Abschirmplatte 8 bereits synchronisiert mit dem Formfolienabschnitt in die Heizstation 1 einlaufen und abbremsen zu lassen.

## Patentansprüche

1. Verfahren zum Starten einer kontinuierlich arbeitenden Thermoformmaschine mit einer Heizstation (1), in der im Stillstand eine Abschirmplatte (8) zwischen die Wärmequelle (6) und die Formfolie (4) verstellt ist, bei dem die Verweildauer D der Formfolie (4) im Normalbetrieb mit konstanter Vorschubgeschwindigkeit in der Heizstation (1) bestimmt und der Beschleunigungsverlauf der Formfolie (4) aus dem Stillstand bis zum Erreichen der konstanten Vorschubgeschwindigkeit festgelegt wird, und bei dem der Beschleunigungsverlauf der entgegen der Vorschubrichtung der Formfolie (4) aus der Heizstation (1) entfernten Abschirmplatte (8) so bestimmt wird, daß die lokal nicht mehr von der Abschirmplatte (8) abgeschatteten Formfolienbereiche in der Heizstation (1) in einer der Verweildauer D entsprechenden Transferzeit von dem in Förderrichtung vorderen Rand (9) der Abschirmplatte (8) bis zum Ende der Heizstation gefördert werden.

2. Verfahren nach Anspruch 1, **dadurch gekennzeichnet, daß** beim Starten der Thermoformmaschine der Beginn der Verstellung der Abschirmplatte (8) um eine Verweildauer vor dem Beginn des Vorschubs der Formfolie (4) liegt.

3. Verfahren nach Anspruch 1 oder 2, **dadurch gekennzeichnet, daß** als Wärmequellen (6) eine Mehrzahl in Förderrichtung (3) der Formfolie (4) benachbarter NIR-Strahler (5) eingesetzt werden.

4. Verfahren nach Anspruch 3, **dadurch gekennzeichnet, daß** die Heizleistung der NIR-Strahler (5) im Stillstand der Thermoformmaschine reduziert wird.

5. Verfahren nach Anspruch 4, **dadurch gekennzeichnet, daß** die Heizleistung der NIR-Strahler (5) beim Starten Thermoformmaschine so frühzeitig erhöht wird, daß beim Beginn des Vorschubs der Formfolie (4) die Heizleistung des Dauerbetriebs erreicht ist.

6. Verfahren nach Anspruch 4, **dadurch gekennzeichnet, daß** die Heizleistung der NIR-Strahler (5) beim Starten der Thermoformmaschine so frühzeitig erhöht wird, daß beim Beginn der Verstellung der Abschirmplatte (8) die Heizleistung des Dauerbetriebs erreicht ist.

7. Verfahren nach einem der Ansprüche 1 bis 6, **dadurch gekennzeichnet, daß** zumindest beim Start der Thermoformmaschine mittels eines der Heizstation (1) nachgeordneten Temperatursensors die Temperatur der Formfolie (4) gemessen und als Regelgröße in einem Regelkreis für die Verweildauer der Formfolie (4) in der Heizstation (1) oder den Stellgrad der Heizung genutzt wird.

8. Verfahren nach Anspruch 7, **dadurch gekennzeichnet, daß** als Temperatursensor ein Pyrometer (11) eingesetzt wird.

9. Verfahren zum Stoppen einer kontinuierlich arbeitenden Thermoformmaschine mit einer Heizstation (1), in der für den Stillstand in Förderrichtung (3) der Formfolie (4) eine Abschirmplatte (8) zwischen die Wärmequelle (6) und die Formfolie (4) verstellt wird, bei dem der in Förderrichtung vordere Rand (9) der Abschirmplatte (8) mit dem am Ende der Heizstation (1) zur Ruhe kommenden Formfolienbereich synchronisiert und sychronisiert durch die Heizstation (1) bewegt und in der Heizstation (1) abgebremst wird, und die Aufsynchronisierung der Abschirmplatte (8) mit dem Formfolienbereich außerhalb, stromauf vor der Heizstation (1) erfolgt.

10. Verfahren nach Anspruch 9, **dadurch gekennzeichnet, daß** die Abbremsung der Formfolie (4) erst gestartet wird, wenn der letzte erwärmte und zu verarbeitende Formfolieabschnitt die Heizstation (1) verlassen hat.

11. Verfahren nach einem der Ansprüche 1 bis 10, **dadurch gekennzeichnet, daß** für die Verstellung der Abschirmplatte (8) ein geregelter Antrieb eingesetzt wird.

## Claims

1. A method of starting a continuously operating thermoforming machine comprising a heating station (1) in which in the stopped condition a shield plate (8) is moved between the heat source (6) and the forming sheet (4), wherein the residence time D of the forming sheet (4) is determined in normal operation with a constant advance speed in the heating station (1) and the acceleration pattern for the forming sheet (4) is established from the stopped condition until the attainment of the constant advance speed, and wherein the acceleration pattern for the shield plate (8) which is removed from the heating station (1) in opposite relationship to the advance direction of the forming sheet (4 is so determined that the forming sheet regions which are locally no longer shaded by the shield plate (8) are conveyed in the heating station (1) in a transfer time corresponding to the residence time (D) from the edge (9), which is the front edge in the conveyor direction, of the shield plate (8) to the end of the heating station.

2. A method according to claim 1 **characterised in that** when starting the thermoforming machine the beginning of the movement of the shield plate (8) is a residence time before the beginning of the advance of the forming sheet (4).

3. A method according to claim 1 or claim 2 **characterised in that** a plurality of NIR-radiating devices (5) which are adjacent in the conveyor direction (3) of the forming sheet (4) are used as heat sources (6).

4. A method according to claim 3 **characterised in that** the heating output of the NIR-radiating devices (5) is reduced in the stopped condition of the thermoforming machine.

5. A method according to claim 4 **characterised in that** the heating output of the NIR-radiating devices (5) is increased at such an early time when starting the thermoforming machine that at the beginning of the advance of the forming sheet (4) the heating output of continuous operation is attained.

6. A method according to claim 4 **characterised in that** the heating output of the NIR-radiating devices (5) is increased at such an early time when starting the thermoforming machine that at the beginning of the movement of the shield plate (8) the heating output of continuous operation is attained.

7. A method according to one of claims 1 to 6 **characterised in that** at least when starting the thermoforming machine the temperature of the forming sheet (4) is measured by means of a temperature sensor arranged downstream of the heating station (1) and used as a regulating value in a regulating circuit for the residence time of the forming sheet (4) in the heating station (1) or the set degree of heating.

8. A method according to claim 7 **characterised in that** a pyrometer (11) is used as the temperature sensor.

9. A method of stopping a continuously operating thermoforming machine comprising a heating station (1) in which a shield plate (8) is moved between the heat source (6) and the forming sheet (4) for the stopped condition in the conveyor direction of the forming sheet (4), wherein the edge (9), which is the front edge in the conveyor direction, of the shield plate (8) is synchronised with the forming sheet region which comes to rest at the end of the heating station (1) and is moved in synchronised relationship through the heating station (1) and is braked in the heating station (1), and synchronisation of the shield plate (8) with the forming sheet region is effected outside and upstream of the heating station (1).

10. A method according to claim 9 **characterised in that** braking of the forming sheet (4) is started only when the last heated forming sheet portion to be processed has left the heating station (1).

11. A method according to one of claims 1 to 10 **characterised in that** a regulated drive is used for the movement of the shield plate (8).

## Revendications

1. Procédé de démarrage d'une machine de thermoformage travaillant en continu et comprenant un poste de chauffage (1) dans lequel, lors de l'arrêt, une plaque de protection (8) est amenée entre la source de chaleur (6) et la feuille thermoformée (4), procédé selon lequel la durée de séjour D de la feuille thermoformée (4) dans le poste de chauffage (1) est définie avec une vitesse d'avance constante en service normal et le profil de la courbe d'accélération de la feuille thermoformée (4) est fixé, de l'arrêt jusqu'à la vitesse d'avance constante, et selon lequel le profil de la courbe d'accélération de la plaque de protection (8), qui est retirée du poste de chauffage (1) dans le sens opposé au sens d'avance de la feuille thermoformée (4), est déterminé de manière telle que les portions de feuille thermoformée qui ne sont localement plus occultées par la plaque de protection (8) soient transportées dans le poste de chauffage (1), en un temps de transfert correspondant à la durée de séjour D, depuis le bord avant (9) de la plaque de protection (8), vu dans le sens du transport, jusqu'à la fin du poste de chauffage (1).

2. Procédé selon la revendication 1, **caractérisé en ce que**, lors du démarrage de la machine de thermoformage, le début du déplacement de la plaque de protection (8) est en avance d'une période de séjour par rapport au début de l'avance de la feuille thermoformée (4).

3. Procédé selon la revendication 1 ou 2, **caractérisé en ce que** l'on utilise comme sources de chaleur (6) une pluralité de radiateurs NIR (5) qui sont contigus dans le sens de transport (3) de la feuille thermoformée (4).

4. Procédé selon la revendication 3, **caractérisé en ce que** la puissance de chauffage des radiateurs NIR (5) est réduite lorsque la machine de thermoformage est à l'arrêt.

5. Procédé selon la revendication 4, **caractérisé en ce que**, lors du démarrage de la machine de thermoformage, la puissance de chauffage des radiateurs NIR (5) est augmentée suffisamment tôt pour que la puissance de chauffage du service continu soit atteinte au début de l'avance de la feuille thermoformée (4).

6. Procédé selon la revendication 4, **caractérisé en ce que**, lors du démarrage de la machine de thermoformage, la puissance de chauffage des radiateurs NIR (5) est augmentée suffisamment tôt pour que la puissance de chauffage du service continu soit atteinte au début du déplacement de la plaque de protection (8).

7. Procédé selon une des revendications 1 à 6, **caractérisé en ce que**, au moins lors du démarrage de la machine de thermoformage, la température de la feuille thermoformée (4) est mesurée à l'aide d'un capteur de température, disposé en aval du poste de chauffage (1), et est utilisée comme grandeur réglée dans un circuit de régulation pour la durée de séjour de la feuille thermoformée (4) dans le poste de chauffage (1) ou pour le taux de régulation du chauffage.

8. Procédé selon la revendication 7, **caractérisé en ce que** le capteur de température utilisé est un pyromètre (11).

9. Procédé d'arrêt d'une machine de thermoformage travaillant en continu et comprenant un poste de chauffage (1) dans lequel, lors de l'arrêt dans le sens du transport (3) de la feuille thermoformée (4), une plaque de protection (8) est amenée entre la source de chaleur (6) et la feuille thermoformée (4), procédé selon lequel le bord avant (9) de la plaque de protection (8), vu dans le sens du transport, est synchronisé avec la portion de feuille thermoformée s'arrêtant à la fin du poste de chauffage (1), est déplacé de façon synchronisée à travers le poste de chauffage (1) et est freiné dans le poste de chauffage (1), et la synchronisation de la plaque de protection (8) avec la portion de feuille thermoformée a lieu à l'extérieur et en amont du poste de chauffage (1).

10. Procédé selon la revendication 9, **caractérisé en ce que** le freinage de la feuille thermoformée (4) n'est déclenché que lorsque la dernière portion de feuille thermoformée qui est chauffée et doit être façonnée a quitté le poste de chauffage (1).

11. Procédé selon une des revendications 1 à 10, **caractérisé en ce que** l'on utilise un moyen d'entraînement asservi pour le déplacement de la plaque de protection (8).
